# EUROPÄISCHE PATENTSCHRIFT

(11) **EP 0 632 841 B1**
(45) Veröffentlichungstag und Bekanntmachung des Hinweises auf die Patenterteilung: **25.11.1998**
(21) Anmeldenummer: 94904911.8
(22) Anmeldetag: 26.01.1994
(51) Int. Cl.: C21B 3/04, C21B 5/04

(54) **VERFAHREN ZUR HERSTELLUNG VON ROHEISEN UND ZEMENTKLINKERN**
PROCESS FOR PRODUCING PIG IRON AND CEMENT CLINKER
PROCEDE DE FABRICATION DE FONTE BRUTE ET DE CLINKER

(30) Priorität: 26.01.1993 AT 125/93
(43) Veröffentlichungstag der Anmeldung: 11.01.1995
(73) Patentinhaber: "HOLDERBANK" Financière Glarus AG, 8750 Glarus (CH)
(72) Erfinder: EDLINGER, Alfred, CH-5400 Baden (CH)
(74) Vertreter: Haffner, Thomas M., Dr.
(86) Internationale Anmeldenummer: AT9400007
(87) Internationale Veröffentlichungsnummer: WO9417214

(56) Entgegenhaltungen:
- EP-A- 0 179 734
- AT-B- 394 201
- US-A- 1 842 609
- US-A- 3 052 534
- US-A- 3 721 548
- US-A- 4 063 930

## Beschreibung

Die Erfindung bezieht sich auf ein Verfahren zur Herstellung von Roheisen und Zementklinker in einem Einschmelzvergaser, bei welchem die Charge zumindest teilweise vorgewärmt und gegebenenfalls entsäuert und vorreduziert oder in Form von Schrott eingesetzt wird, Kohle in eine Wirbelschicht eingeblasen und unter Reduktion der Charge vergast wird und Roheisen sowie Schlacke flüssig abgezogen werden.

Verfahren zur Herstellung von Roheisen in einem Einschmelzvergaser werden üblicherweise auf das gewünschte Roheisenausbringen hin optimiert, wobei gleichzeitig bei den meisten konventionellen Verfahren die Wirtschaftlichkeit über ein entsprechend hochwertiges Produktgas des Vergaserkopfes gerechnet wird. Die Schlacke wird bei derartigen bekannten Verfahren in Hinblick auf die Entfernung von Schadstoffen aus dem Roheisenbad gewählt, wobei bei gleichzeitiger Berücksichtigung der energetischen Nutzung des Produktgases ohne entsprechende Anforderungen an die Qualität des Eisenbades in der Regel ein Schlackenbad erzielt wird, welches keineswegs günstige Voraussetzungen als Zementklinker erfüllt.

Der AT-B 394 201 ist ein Verfahren der oben genannten Art zu entnehmen, bei welchem aus der in den Kopf eines Einschmelzvergasers eingebrachten Charge Roheisen und brennbare Gase gebildet werden.

Die Erfindung zielt nun darauf ab, ein Verfahren der eingangs genannten Art dahingehend weiterzubilden, daß unmittelbar Roheisen und Zementklinker in einem Einschmelzvergaser hergestellt werden können, und daß bei der Roheisenherstellung eine Reihe von Schadstoffen gefahrlos entsorgt werden können. Zur Lösung dieser Aufgabe besteht das erfindungsgemäße Verfahren im wesentlichen darin, daß der dem Einschmelzvergaser aufgegebene Kalksatz gegebenenfalls gemeinsam mit einer Teilmenge eines Eisenerzes in einem Vorwärmschacht vorgewärmt und kalziniert wird und in Abhängigkeit von der gewünschten Zementklinkerzusammensetzung eingebracht wird. Dadurch, daß der Kalksatz in Abhängigkeit von der gewünschten Zementklinkerzusammensetzung eingebracht wird, werden die für das erfindungsgemäße Verfahren erforderlichen Parameter von der Zementklinkerqualität bestimmt. Die Verwendung der Schlacke als zementklinker setzt in der Regel einen höheren CaO-Gehalt voraus, und es kann daher das erfindungsgemäße Verfahren zur gleichzeitigen Herstellung von Roheisen und Zementklinker mit wesentlich minderwertigerem Einsatzmaterial betrieben werden. Das erfindungsgemaß verwendbare Roherz kann im Gegensatz zu den üblichen Einsatzstoffen in einem konventionellen Hochofen hohe Anteile an CaO, SiO₂ und Al₂O₃ aufweisen, da diese Erzbegleiter Komponenten für die Klinkerproduktion darstellen. Da nunmehr die bisher für Einschmelzvergasungsprozesse übliche Optimierung auf Verbesserung der Qualitat des Produktgases gleichfalls nicht erforderlich ist, kann eine wirtschaftliche Verfahrensweise durch Gutschrift der jeweiligen Wärmebilanzen für die Klinkerproduktion erzielt werden. Beim gesonderten Vorwärmen des Kalkmergels, welcher gegebenenfalls mit Eisenerz vermengt ist, wird nach einer Vorwärmung das aufgegebene Material zunächst kalziniert und gegebenenfalls gesintert, wobei für das Kalzinieren und gegebenenfalls Sintern unmittelbar Prozeßabwärme herangezogen werden kann. Die Verwendung von Eisenerz und insbesondere einer Teilmenge eines Eisenerzes für den auf diese Weise vorgewärmten und kalzinierten Kalksatz führt gleichzeitig zur Ausbildung von gut reduzierbaren Ferriten, welche das Eisenausbringen verbessern.

Neben minderwertigem Eisenerz mit relativ hohen Anteilen an MgO, CaO, SiO₂ und Al₂O₃ kann der Einschmelzvergaser mit fester oder flüssiger Stahlwerksschlacke beschickt werden. Als Kohle können verschiedene Kohlenstoffträger, wie Ölschiefer, kommunale und industrielle Abfälle, oder Hausmüll, zumindest teilweise substitutiv eingesetzt werden, und die Verwendung eines Vorwärmschachtes zum Entsäuern und Vorwärmen eines Kalkmergels erlaubt es, den Kalksatz in wesentlich einfacherer Weise an die gewünschte Zementklinkerzusammensetzung anzupassen, und das Verfahren in Hinblick auf die gewünschte Zementklinkerqualität zu führen.

In den Einschmelzvergaserkopf wird in an sich bekannter Weise neben dem Kohlenstoffträger ein vorgewärmtes Luft-Sauerstoff-Gemisch eingeblasen, wobei aus der Verbrennungsreaktion neben der Schmelzwärme ein Reduktionsgas entsteht, welches hauptsächlich aus Kohlenmonoxid, Wasserstoff und Kohlendioxid besteht. Da der Vergasungsprozeß nicht im Sinne einer Verbesserung des Heizwertes des Produktgases optimiert werden muß, kann hier mit vergleichsweise wesentlich geringeren Temperaturen gearbeitet werden, da ein erhöhter CO-Anteil zur Verbesserung des Heizwertes nicht erforderlich ist.

In Abhängigkeit von der Dosierung des Kalksatzes kann unmittelbar eine Schlackenschmelze erzielt werden, welche entsprechend der gewünschten zementtechnologischen Zusammensetzung Hochofenschlacken-, Weißzementklinker-, Portlandzementklinker-, Ferrarizementklinker-, Erzzementklinker- oder Spezialklinkerqualität aufweist.

Um eine übermäßige thermische Belastung zu vermeiden, kann es gegebenenfalls erforderlich erscheinen, den Kalksatz für die Erzielung der gewünschten Zementklinkerqualität nicht ausschließlich in den Einschmelzvergaser aufzugeben, da ein sehr hoher Kalksatz auch eine Erhöhung der Schlackenschmelztemperatur und der Schlackenviskosität zur Folge hätte. Die Schlackenviskosität kann zwar zumindest teilweise durch zugabe entsprechender Zuschläge, wie beispielsweise CaF2, wiederum verringert werden. Insgesamt ist jedoch eine zu hohe Schlackenschmelztemperatur nicht wünschenswert. In diesen Fallen kann das erfindungsgemäße Verfahren mit Vorteil so durchgeführt werden, daß eine Teilmenge des vorgewärmten Kalzinates mit der flüssig abgestochenen Schlacke des Einschmelzvergasers in einer Klinkeranlage vermischt wird, sodaß der gewünschte CaO-Gehalt des gewünschten Zementklinkers in einem vom Einschmelzvergaser gesonderten Reaktor, nämlich der Klinkeranlage, eingestellt werden kann. Eine derartige Klinkeranlage kann in einfacher Weise von Drehrohröfen, insbesondere einer Kaskade derartiger Drehrohröfen gebildet werden.

Zur Verbesserung der Energiebilanz und um Schadstoffe sicher entsorgen zu können, kann im Rahmen des erfindungsgemäßen Verfahrens mit Vorteil so vorgegangen werden, daß mit der Verbrennungsluft chlorhaltige Abfallstoffe, wie z.B. mit Dioxinen und Furanen belastete PCB (polychlorierte Biphenyle), in den Einschmelzvergaser oder den Vorwärmschacht eingeblasen werden. Die chlorhaltigen Abfallstoffe werden thermisch zersetzt, um bei entsprechend hohem Kalksatz, wie er erfindungsgemäß angestrebt wird oder im Vorwärmschacht gelingt, Chlorid in Form von Kalziumchlorid oder anderen Verbindungen abzuscheiden. Weiters kann ein derartiger erhöhter Chlorgehalt mit Rücksicht auf die relativ hohe Schmelztemperatur der Schlackenschmelze unmittelbar dazu herangezogen werden, einen überhöhten Alkaligehalt in der Zementklinkerzusammensetzung zu vermeiden bzw. auszubringen. Mit Vorteil wird hierzu so vorgegangen, daß das Produktgas des Einschmelzvergasers in einem Heißzyklon unter Kondensation von Alkali und gegebenenfalls Schwermetallverbindungen gereinigt wird, wobei vorzugsweise das gereinigte Produktgas mit Kühlluft aus der Kühlung der aus der Schlacke erstarrenden Klinker verbrannt und zum Kalzinieren des Einsatzmateriales aus karbonatischem Ausgangsmaterial verwendet wird. Auf diese Weise wird die Energiebilanz des Verfahrens wesentlich verbessert.

Sofern die zementklinkerzusammensetzung einen zu hohen Eisenoxidgehalt aufweisen sollte, kann es bei der erfindungsgemäßen Verfahrensweise aufgrund der Trennung in einen Einschmelzvergaserprozeß und einen in einer Klinkeranlage gesondert vom Einschmelzvergaser ablaufenden Prozeß vorteilhaft sein, den Eisenoxidgehalt durch Reduktion in der Schlacke herabzusetzen. Mit Vorteil kann hiebei überschüssiges Eisenoxid in der Schlacke unter Abscheidung eines Eisenbades reduziert werden, wobei eine derartige Reduktion insbesondere dann vorteilhaft erscheinen kann, wenn der schmelzflüssigen Einschmelzvergaserschlacke flüssige Konverterschlacke in einer für die Resteisenverwertung ausreichenden Menge zugesetz wird. Falls Erzzementklinker ohne zusatz von flüssiger Stahlwerksschlacke hergestellt werden soll ist es möglich, den erhöhten Eisenoxidanteil im Zielklinker bereits im Einschmelzvergaser durch nur teilweise Reduktion des eingebrachten Eisenerzes (Ferrite) bereitzustellen.

Um die hohe fühlbare und latente Warme der Schlacke bei der Herstellung von Zementklinker optimal zu nutzen, ist es vorteilhaft so vorzugehen, daß die Abkühlung der Schmelzklinker bei Temperaturen über 1000°C in einem Wirbelschicht-bzw. Fließbettkühler unter Verwendung von Kühlluft erfolgt, wobei beim Abkühlen die Möglichkeit geschaffen wird, die gewünschten zementklinkerphasen, insbesondere Alit und Belit, in entsprechender Menge auszubilden und gleichzeitig eine entsprechende Menge an vorgewärmter Kühlluft für Vorwärmzwecke bereitzustellen. Mit Vorteil wird das Verfahren hiebei so geführt, daß die Haltezeit auf Temperaturen über 1000°C zur Ausbildung der zementklinkerphasen Alit und Belit wenigstens 15 Minuten, vorzugsweise 25 bis 30 Minuten gewählt wird.

Mit Rücksicht auf die bei einem Einschmelzvergaserprozeß ohne weiteres verwendbare minderwertige Kohle oder die Verwendung von Ölschiefer, Müllasche als Silikatträger und Müllschrott kann bei relativ hohem Schwefelanteil auch eine entsprechende Menge an sulfidisch gebundenem Schwefel in der Schlacke entstehen. Mit Vorteil wird in diesen Fällen das Verfahren so geführt, daß in der Klinkeranlage sulfidisch gebundener Schwefel sowie Kalziumcarbid zu SO₃ bzw. CaO und CO₂ oxidiert werden.

Insgesamt ergibt sich durch die erfindungsgemäße Trennung der metallurgischen Redoxarbeit und die anschließende Fertigstellung der Schlackenqualität eine Verfahrensführung, bei welcher das Verfahren unter gleichzeitiger Erzielung von Roheisen aus minderwertigen Ausgangsstoffen und zementklinker optimiert werden kann. Eine stark basische Schlacke, wie sie für die Herstellung von Zementklinker erwünscht ist, kann prinzipiell auch mit Eisenoxid angereichert werden, wobei es bekannt ist, daß derartige Eisenoxide in der Schlacke als Flußmittel wirken, sodaß ein Schmelzklinker mit allerdings relativ hohem Eisenoxidgehalt entsteht. Derartige Schmelzklinker sind beispielsweise als Ferrari- oder Erzzemente bekannt. Im Falle eines derartig hohen Eisenoxidgehaltes in der Schlacke kann sekundarmetallurgisch in der noch flüssigen Schlacke in der Klinkeranlage, beispielsweise in einer zweiten Pfanne, mit Kohlenstoff bis zu einem gewünschten Eisenoxidgehalt reduziert werden.

Aufgrund des relativ großen Reduktionspotentiales der Eisenschmelze im Einschmelzvergaser werden miteingeschleppte schwermetallverbindungen, wie sie aus den eingesetzten Abfallstoffen herrühren, vor allen Dingen aber Zink, Blei, Kupfer und Nickel, reduziert. zink geht bei derartigen Verfahren in die Gasphase, wohingegen sich Kupfer und Nickel im Eisenbad lösen und Blei als Werkbleilegierung eine Schmelzphase unter dem Eisenbad ausbildet. Das unerwünschte Kupfer stellt hierbei die einzige wesentliche Beschränkung für die Mengenbilanz der einzubringenden Abfallstoffe dar, da Kupfer als Eisenschädling nur in geringen, maximal zusässigen Mengen im Roheisen enthalten sein darf. Schwefel und Chrom gehen üblicherweise in die Schlackenphase, wobei allenfalls miteingebrachtes metallisches Aluminium verbrennt und ebenfalls in die Schlackenphase eingebunden wird.

Größere Mengen an höher konzentrierten schwermetallhältigen Abfällen können ebenso wie Alkaliüberschüsse über eine Chlorierung ausgetrieben werden, wobei ein Teil der Verbrennungs- und Reduktionskohle durch Abfalllösungsmittel mit Chlorgehalten, wie z.B. Trichloräthylen, ersetzt werden kann, oder aber beispielsweise Kalziumchlorid dem Rohmaterial im Vorwärmer bzw. dem Einschmelzvergaser aufgegeben werden kann.

Die Reinigung des Produktgases aus dem Kopf des Einschmelzvergasers kann in einem Heißzyklon bei relativ geringen Temperaturen von 800°C bis 1000°C vorgenommen werden. Bei derartigen Temperaturen können die im Einschmelzvergaser verdampften Alkaliverbindungen sowie die Schwermetallchloride kondensiert werden, wobei zink zu Zinkoxid oxidiert werden kann und gleichfalls als Staub abgeschieden werden kann.

Zwischen dem Heißzyklon und dem Einschmelzvergaser können die Gase im Kreislauf geführt werden, sodaß eine Aufkonzentrierung auf für eine Weiterverwertung sinnvolle Konzentrationen möglich wird.

Im Vorwärmschacht kann das aus dem Heißzyklon abgezogene Produktgas mit in der Klinkeranlage vorgewärmter Luft in vorteilhafter Weise verbrannt werden, sodaß der Kalkmergel entsäuert werden kann und gegebenenfalls mit Erz umgesetzt werden kann, wodurch gut reduzierbare Ferritphasen entstehen. Gleichzeitig wird mit einer derartigen Vorwärmung eine überaus effiziente Abgasreinigung und vor allen Dingen eine Entstaubung und Restentschwefelung erzielt. Stickoxide können in konventioneller Weise durch Einblasen von Ammoniak im Temperaturbereich von etwa 900°C abgebaut werden, wobei diese Eindüsung im unteren Bereich des Vorwärmschachtes erfolgt.

Der Schmelzklinker kann nach entsprechender Führung der Kühlphasen mit entsprechender Verweilzeit bei Temperaturen von über 1000°C zur Ausbildung der Klinkerphasen Alit und Belit granuliert werden, wobei eine Schmelzklinkergranulation in besonders einfacher Weise über ein Schleuderrad vorgenommen werden kann. Die bei der Abkühlung des Schmelzklinkers vorgewärmte Kühlluft kann zur Verbesserung der Energiebilanz für die Entsäuerung des Kalkmergels und die Verbrennung im Einschmelzvergaser genutzt werden.

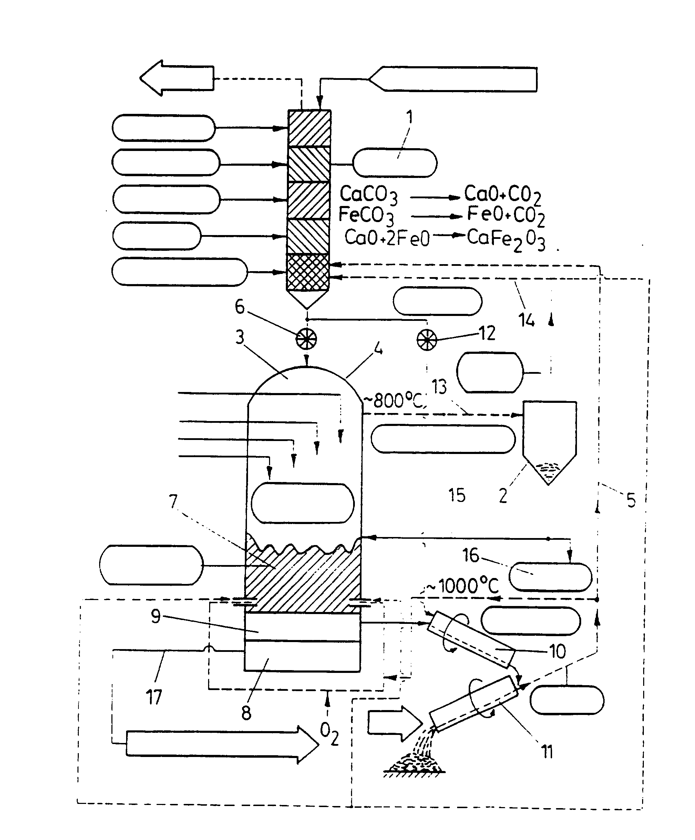

Die Erfindung wird nachfolgend an Hand eines in der Zeichnung schematisch dargestellten Ausführungsbeispieles einer für die Durchführung des erfindungsgemäßen Verfahrens geeigneten Einrichtung erläutert.

In der zeichnung ist mit 1 ein Vorwärmschacht bezeichnet, auf welchen Kalkmergel und Eisenerz aufgegeben werden. Der aufgegebene Kalkmergel und das zugesetzte Eisenerz durchlaufen im Vorwärmschacht zunächst eine Trockenzone, an welche eine Vorwarmzone anschließt. In der weiteren Folge durchläuft das eingesetzte Material eine Kalzinierzone und eine Sinterzone, in welcher Kalziumferrite gebildet werden. Die erforderliche Energie zur Kalzination und zur Vorwärmung wird in der Verbrennungszone durch Verbrennung des in einem Zyklon 2 gereinigten Produktgases aus dem Kopf 3 eines Einschmelzvergasers 4 mit vorgewärmter Luft erzielt, welche über die Leitung 5 zugeführt wird. Aus dem Vorwärmschacht 1 gelangt das Material über eine Zellradschleuse 6 in den Einschmelzvergasern, wobei dem Kopf des Einschmelzvergasers über entsprechende Zuleitungen Kohle, Ölschiefer, Müllasche, Müllschrott und/oder Hausmüll mit einem Trägergas eingeblasen wird. Müllschrott ist ein weitgehend vorreduziertes Material, sodaß in diesen Fällen eine wesentliche Vorreduktion von Eisenerz entfallen kann, und nur eine Teilmenge des Eisenerzes dem Kalkmergel zugesetzt wird. Mit Rücksicht auf den im Hinblick auf die gewünschte Schlackenschmelzenzusammensetzung wesentlich höheren Kalkgehalt kann aber auch ein erheblicher Anteil des für die Roheisengewinnung erforderlichen Ausgangsmateriales gemeinsam mit dem Kalkmergel unter Ausbildung von Ferriten zugeführt werden, welche besonders leicht reduzierbar sind.

Die Reduktion des Einsatzmateriales unter gleichzeitiger Einbringung der Schmelzwärme erfolgt in einer Kohlewirbelschicht 7 im unteren Bereich des Einschmelzvergasers. Am Fuß des Einschmelzvergasers sammelt sich ein Roheisenbad 8, auf welchem ein Schlackenbad 9 auf schwimmt. Das Roheisenbad wird ebenso wie das Schlackenbad in regelmäßigen Zeitintervallen abgestochen, wobei die Schlackenschmelze in eine aus zwei Drehrohröfen 10 und 11 bestehende Klinkeranlage ausgetragen wird. Im ersten Drehrohrofen 10 erfolgt hiebei gegebenenfalls eine Zugabe von kalziniertem Kalkmergel, welche über eine Zellradschleuse 12 eingetragen wird. Kühlluft wird über den zweiten Drehrohrofen 11 zugeführt, sodaß die gewünschte Luftkühlung unter gleichzeitiger Vorwärmung der später verwendeten Verbrennungsluft, wie sie über die Leitung 5 dem Vorwärmschacht rückgeführt wird, gewährleistet ist.

Das Produktgas aus dem Kopf 3 des Einschmelzvergasers 4 wird über eine Leitung 13 dem Heißzyklon 2 zugeführt, wobei in dem Produktgas neben Kohlenmonoxid, Wasserstoff auch Alkalien und Zink je nach Zugabe bzw. Zusammensetzung der Beimengungen im Einschmelzvergaser und insbesondere je nach der Chlormenge enthalten sind. Das gereinigte Produktgas wird über die Leitung 14 der Verbrennungszone des Vorwärmschachtes 1 rückgeführt, wohingegen die abgschiedenen Feststoffe im Kreislauf geführt werden und über eine Leitung 15 in die Kohlewirbelschicht rückgeführt werden. Nach Erzielung einer entsprechenden Konzentration an verwertbaren Substanzen in den im Kreislauf geführten Feststoffen kann eine Ausschleusung zu einer Entsorgung 16 erfolgen. Eine weitere Möglichkeit besteht darin, einen Teilstrom des gereinigten Zyklongases dem Einschmelzvergaser in die Verbrennungszone rückzuführen (Kohlenwirbelschicht).

Das Roheisen wird über den Roheisenabstich 17 zum Stahlwerk weitergeleitet.

Die Erfindung wird nachfolgend an Hand eines Ausführungsbeispieles näher erläutert.

Mit einer Charge aus Pyrit (Hämatit) und Kalkmergel wurde die nachfolgende Klinker- und Eisen-Bad-zusammensetzung erschmolzen:

| Klinker | (%) |
|---|---|
| SiO₂ | 18.1 |
| Al₂O₃ | 8.5 |
| Fe₂O₃ | 10.9 |
| CaO | 61.0 |
| MgO | 1.8 |
| SO₃ | 3.3 |

| Eisen | (%) |
|---|---|
| C | 4.43 |
| Si | 0.05 |
| Mn | 0.12 |
| P | 0.087 |
| S | 0.013 (0.003) |
| Cu | 1.133 (0.073) |

Als Reduktionsmittel wurde Anthrazit eingesetzt und ein Klinker/Roheisenfaktor von 1 eingestellt.

Die Zement festigkeit war mit den Werten

| | |
|---|---|
| 7 Tage | 31 N/mm² |
| 28 Tage | 42 N/mm² |

als hervorragend zu bezeichnen, wobei insbesondere die hohe Frühfestigkeit vorteilhaft erscheint.

## Patentansprüche

1. Verfahren zur Herstellung von Roheisen und Zementklinker in einem Einschmelzvergaser (4), bei welchem die Charge zumindest teilweise vorgewärmt und gegebenenfalls entsäuert und vorreduziert oder in Form von Schrott eingesetzt wird, Kohle in eine Wirbelschicht (7) eingeblasen und unter Reduktion der Charge vergast wird und Roheisen sowie Schlacke flüssig abgezogen werden, dadurch gekennzeichnet, daß der dem Einschmelzvergaser (4) aufgegebene Kalksatz in einem Vorwärmschacht (1) vorgewärmt und kalziniert wird und in Abhängigkeit von der gewünschten Zementklinkerzusammensetzung eingebracht wird.

2. Verfahren nach Anspruch 1, dadurch gekennzeichnet, daß der Kalksatz mit einer Teilmenge eines Eisenerzes vorgewärmt und kalziniert wird.

3. Verfahren nach Anspruch 1 oder 2, dadurch gekennzeichnet daß eine Teilmenge des vorgewärmten Kalzinates mit der flüssig abgestochenen Schlacke des Einschmelzvergasers (4) in einer Klinkeranlage vermischt wird.

4. Verfahren nach Anspruch 1, 2 oder 3, dadurch gekennzeichnet, daß mit der Verbrennungsluft chlorhaltige Abfallstoffe, wie z.B. mit Dioxinen und Furanen belastete PCB (polychlorierte Biphenyle), in den Einschmelzvergaser (4) oder den Vorwärmschacht (1) eingeblasen werden.

5. Verfahren nach einem der Ansprüche 1 bis 4, dadurch gekennzeichnet, daß das Produktgas des Einschmelzvergasers (4) in einem Heißzyklon unter Kondensation von Alkali und gegebenenfalls Schwermetallverbindungen gereinigt wird.

6. Verfahren nach einem der Ansprüche 1 bis 5, dadurch gekennzeichnet, daß das gereinigte Produktgas mit Kühlluft aus der Kühlung der aus der Schlacke erstarrenden Klinker verbrannt und zum Kalzinieren des Einsatzmateriales aus karbonatischem Ausgangsmaterial verwendet wird.

7. Verfahren nach einem der Ansprüche 1 bis 6, dadurch gekennzeichnet, daß überschüssiges Eisenoxid in der Schlacke unter Abscheidung eines Eisenbades (8) reduziert wird.

8. Verfahren nach einem der Ansprüche 1 bis 7, dadurch gekennzeichnet, daß der schmelzflüssigen Einschmelzvergaserschlacke (9) flüssige Konverterschlacke in einer für die Resteisenverwertung ausreichenden Menge zugesetzt wird.

9. Verfahren nach einem der Ansprüche 1 bis 8, dadurch gekennzeichnet, daß die Abkühlung der Schmelzklinker bei Temperaturen über 1000°C in einem Wirbelschicht- bzw. Fließbettkühler unter Verwendung von Kühlluft erfolgt.

10. Verfahren nach einem der Ansprüche 1 bis 9, dadurch gekennzeichnet, daß die Haltezeit auf Temperaturen über 1000°C zur Ausbildung der Zementklinkerphasen Alit und Belit wenigstens 15 Minuten, vorzugsweise 25 bis 30 Minuten gewählt wird.

11. Verfahren nach einem der Ansprüche 1 bis 10, dadurch gekennzeichnet, daß in der Klinkeranlage sulfidisch gebundener Schwefel sowie Kalziumcarbid zu SO₃ bzw. CaO und CO₂ oxidiert werden.

12. Verfahren nach einem der Ansprüche 1 bis 11, dadurch gekennzeichnet, daß im Einschmelzvergaser (4) mit Kohle Ölschiefer, Müll, Müllschrott oder Stahlwerksschlacke oder -stäube eingetragen werden.

## Claims

1. A process for producing pig iron and cement clinker in a melter gasifier (4), in which the charge is introduced in a state at least partially preheated and, if required, deacidified and prereduced or in the form of scrap, coal is blown into a fluidized bed (7) and gasified while reducing the charge and pig iron as well as slag are drawn off in the liquid state, characterized in that the lime batch fed to the melter gasifier (4) is preheated and calcined in a preheating shaft (1) and introduced as a function of the cement clinker composition desired.

2. A process according to claim 1, characterized in that the lime batch is preheated and calcined together with a partial amount of an iron ore.

3. A process according to claim 1 or 2, characterized in that a partial amount of the preheated calcinate is mixed in a clinker plant with the slag of the melter gasifier (4) tapped in the liquid state.

4. A process according to claim 1, 2 or 3, characterized in that chlorine-containing waste substances such as, for instance, PCBs (polychlorinated biphenyls) loaded with dioxins and furans are blown into the melter gasifier (4) or into the preheating shaft (1) together with the combustion air.

5. A process according to any one of claims 1 to 4, characterized in that the product gas of the melter gasifier (4) is purified in a hot cyclone under condensation of alkali and optionally heavy metal compounds.

6. A process according to any one of claims 1 to 5, characterized in that the purified product gas is burnt with cooling air obtained from the cooling of the clinker solidifying from the slag and is used for calcining the charging material from carbonated starting material.

7. A process according to any one of claims 1 to 6, characterized in that excess iron oxide in the slag is reduced with an iron bath (8) depositing.

8. A process according to any one of claims 1 to 7, characterized in that liquid converter slag is added to the molten melter gasifier slag (9) in an amount sufficient for processing residual iron.

9. A process according to any one of claims 1 to 8, characterized in that cooling of the melting clinker is effected at temperatures of above 1000°C in a fluidized bed cooler, using cooling air.

10. A process according to any one of claims 1 to 9, characterized in that the retention time at temperatures of above 1000°C for the formation of the cement clinker phases alite and belite is chosen to be at least 15 minutes and, preferably, 25 to 30 minutes.

11. A process according to any one of claims 1 to 10, characterized in that sulfidically bound sulfur as well as calcium carbide are oxidized to SO₃ and CaO and CO_{2,} respectively, in the clinker plant.

12. A process according to any one of claims 1 to 11, characterized in that oil shale, waste, waste scrap or steel works slag or dusts are charged with coal into the melter gasifier (4).

## Revendications

1. Procédé de fabrication de fonte brute et de clinker de ciment dans une cuve de gazéification-fusion (4), selon lequel la charge est au moins en partie préchauffée et éventuellement désacidifiée et soumise à préréduction ou est introduite sous forme de ferraille, du charbon est insufflé dans une couche tourbillonnante (7) et est gazéifié avec réduction de la charge et la fonte brute ainsi que du laitier sont soutirés à l'état liquide,
caractérisé en ce que la charge de chaux introduite dans la cuve de gazéification-fusion (4) est préchauffée et calcinée dans une cuve (1) de préchauffage et est introduite en fonction de la composition de clinker de ciment que l'on souhaite obtenir.

2. Procédé selon la revendication 1, caractérisé en ce qu'on préchauffe et en ce qu'on calcine la charge de chaux avec une quantité partielle d'un minerai de fer.

3. Procédé selon la revendication 1 ou 2, caractérisé en ce qu'on mélange dans une installation à clinker une quantité partielle du produit de calcination préchauffé avec le laitier soutiré à l'état liquide de la cuve de gazéification-fusion (4).

4. Procédé selon la revendication 1, 2 ou 3, caractérisé en ce qu'avec l'air comburant sont insufflées des substances résiduaires chlorées, comme par exemple des biphényles polychlorés [PCB], chargés de dioxines et de furannes, dans la cuve de gazéification et de fusion (4) ou dans la cuve de préchauffage (1).

5. Procédé selon l'une des revendications 1 à 4, caractérisé en ce que le gaz produit dans la cuve de gazéification-fusion (4) est purifié dans un cyclone chaud, avec condensation de matières alcalines et éventuellement de composés de métaux lourds.

6. Procédé selon l'une des revendications 1 à 5, caractérisé en ce que le produit gazeux purifié est brûlé avec de l'air de refroidissement provenant du refroidissement du clinker solidifié à partir du laitier et sert à la calcination de la matière de départ carbonatée servant de charge.

7. Procédé selon l'une des revendications 1 à 6, caractérisé en ce que l'excès d'oxyde de fer présent dans le laitier est réduit avec séparation d'un bain de fer (8).

8. Procédé selon l'une des revendications 1 à 7, caractérisé en ce que le laitier (9) liquéfié par fusion dans la cuve de gazéification-fusion est additionné d'un laitier de convertisseur liquide en une quantité suffisante pour la rentabilisation du fer résiduel.

9. Procédé selon l'une des revendications 1 à 8, caractérisé en ce que le refroidissement du clinker fondu a lieu, avec utilisation d'air de refroidissement, à des températures supérieures à 1000°C dans un dispositif de refroidissement à lit tourbillonnant ou à lit fluidisé.

10. Procédé selon l'une des revendications 1 à 9, caractérisé en ce que le temps de séjour à des températures supérieures à 1000°C pour former les phases d'alite et de bélite du clinker de ciment est choisi pour durer au moins 15 minutes, de préférence de 25 à 30 minutes.

11. Procédé selon l'une des revendications 1 à 10, caractérisé en ce que, dans l'installation de production de clinker, le soufre lié sous forme de sulfure ainsi que le carbure de calcium sont oxydés en donnant respectivement SO₃, CaO et CO₂.

12. Procédé selon l'une des revendications 1 à 11, caractérisé en ce que l'on introduit dans la cuve de gazéification-fusion (4), avec du charbon, du schiste bitumineux, des déchets ménagers ou ordures, des déchets de ferraille ou des laitiers ou scories ou poussières d'aciérie.
